# EUROPÄISCHE PATENTSCHRIFT

(11) **EP 1 444 586 B1**
(45) Veröffentlichungstag und Bekanntmachung des Hinweises auf die Patenterteilung: **05.01.2011**
(21) Anmeldenummer: 02794955.1
(22) Anmeldetag: 11.11.2002
(51) Int. Cl.: G06F 13/00

(54) **BEDIENUNGSVORRICHTUNG FÜR EIN KABINENSYSTEM IN EINEM FLUGZEUG**
CONTROL DEVICE FOR A CABIN SYSTEM IN AN AIRPLANE
DISPOSITIF DE COMMANDE POUR UN SYSTEME DE CABINE D'AVION

(30) Priorität: 13.11.2001 DE 10155651
(43) Veröffentlichungstag der Anmeldung: 11.08.2004
(73) Patentinhaber: Airbus Operations GmbH, 21129 Hamburg (DE)
(72) Erfinder: RIEDEL, Christian, 21640 Bliedersdorf (DE); REINHOLD, Thorsten, D-21635 Jork (DE); ENDRESS, Manfred, 21614 Buxtedhude (DE)
(74) Vertreter: Maiwald Patentanwalts GmbH
(86) Internationale Anmeldenummer: PCT/DE2002/004174
(87) Internationale Veröffentlichungsnummer: WO 2003/042797

(56) Entgegenhaltungen:
- EP-A- 0 570 690
- EP-A- 0 580 474
- EP-A- 1 160 160
- EP-A2- 0 272 877
- GB-A- 2 346 350
- US-A- 5 854 591
- US-A- 6 131 065
- US-B1- 6 401 013

## Beschreibung

Die Erfindung betrifft eine Bedienungsvorrichtung für ein Kabinensystem in einem Flugzeug, welches zur Überwachung und Steuerung der Funktionen von vorzugsweise Informations-, Audio-, Beleuchtungs-, Tür-, Wasser- und/oder Abwassersystemen dient, wobei die Bedienungsvorrichtung unter anderem einen Hauptrechner mit einem vorgegebenen Betriebssystem und mit an das Kabinensystem angepaßter Anwendungs-Software, eine Bedieneroberfläche mit einer oberflächensensitiven Eingabevorrichtung, einen Regler für die Bedieneroberfläche, einen Graphikregler, einen Audioregler und mindestens einen magnetischen Koppler für zugeordnete Schnittstellen aufweist.

Eine solche Vorrichtung ist aus EP0570690 A2 bekannt.

Eine derartige Bedienungsvorrichtung ist z.B. unter dem Namen "CIDS-Einheit in Flugzeugen allgemein bekannt. Diese Einheit steuert und überwacht eine Vielzahl von Kabinenfunktionen mit Hilfe von Bediengeräten mit einfachen Tastaturen und relativ kleinen LCD's. Sie erfordert auch eine Schnittstelle, beispielsweise zum Anschluß eines Laptops, der von einer Bedienungsperson an Bord eines Flugzeuges zur Durchführung zusätzlicher, von der Bedienungsvorrichtung unabhängiger Funktionen benötigt wird. Hierbei kann es sich beispielsweise um die Durchführung von Testprogrammen oder anderen Anwenderprogrammen für das Kabinensystem handeln, wobei auch andere, von dem Betriebssystem der Bedienungsvorrichtung unabhängige Betriebssysteme verwendet werden können.

Der Erfindung liegt nun die Aufgabe zugrunde, eine Bedienungsvorrichtung der eingangs genannten Art derart auszugestalten, daß zusätzliche, von der Bedienungsvorrichtung unabhängige Funktionen jederzeit durchgeführt werden können.

Die Aufgabe wird erfindungsgemäß dadurch gelöst, daß ein zusätzlicher Personalcomputer als zweiter Hauptrechner mit seiner zentralen Rechnereinheit und weiteren elektronischen Baugruppen in die Bedienungsvorrichtung mit gemeinsamen B:!dschirm und gemeinsamer oberflächensensitiven Eingebevorrichtung in einem Gehäuse derart integriert ist, dass eine Bedienung des zusätzlichen Personalcomputers mittels der oberflächensensitiven Eingabevorrichtung der Bedieneroberfläche erfolgt, daß die zentrale Rechnereinheit des Personalcomputers an den Hauptrechner der Bedienungseinrichtung autark angeschlossen ist und daß zusätzliche autarke Funktionen mit Hilfe des integrierten Personalcomputers durch eine Bedienungsperson ohne Beeinflussung der Funktionen der Bedienungsvorrichtung durchführbar sind

Erfinderische Ausgestaltungen sind in der Unteransprüchen 2 bis 6 beschrieben.

Ein Vorteil der Erfindung liegt in einer Gewichtsersparnis sowie in der Leistungseinsparnis, da bei Durchführung der zusätzlichen Funktionen beispielsweise Monitor und Lautsprecher der Bedienungsvorrichtung verwendet werden, diese Bauelemente bei dem zusätzlichen Personalcomputer entfallen können und somit nicht in die Bedienungsvorrichtung integriert werden müssen. Weiterhin ist von Vorteil, daß der verwendete Personalcomputer (bzw. seine verwendeten Bauelemente) für seine Integration in die Bedienungsvorrichtung keiner weiteren bzw. zusätzlichen luftfahrttechnischen Zulassung bedarf (bzw. bedürfen), obgleich für die zusätzlichen Funktionen Bauelemente und Funktionen der Bedienungsvorrichtung benutzt werden. Da der zusätzliche Personalcomputer als Bauelementen-Modul betrachtet werden kann, wird vorteilhafterweise eine verhältnismäßig kleine Bauausführung ermöglicht, beispielsweise mit den Abmessungen von 360 x 380 X 67 mm, die den Abmessungen der Bedienungsein-richtung entsprechen.

In der Zeichnung ist ein Ausführungsbeispiel nach der Erfindung dargestellt, und zwar zeigt:
- Fig; 1:: eine Bedienungsvorrichtung für ein Flugzeug- Kabinensystem mit einem integrierten Personalcomputer, und

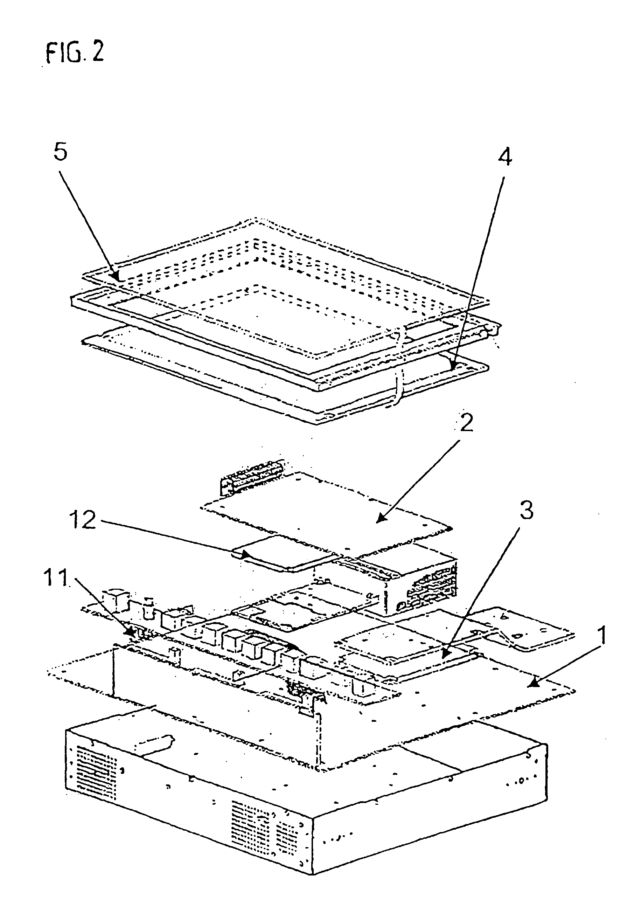

- Fig. 2:: eine Explosionszeichnung einer vollständigen Bedienungsvorrichtung,

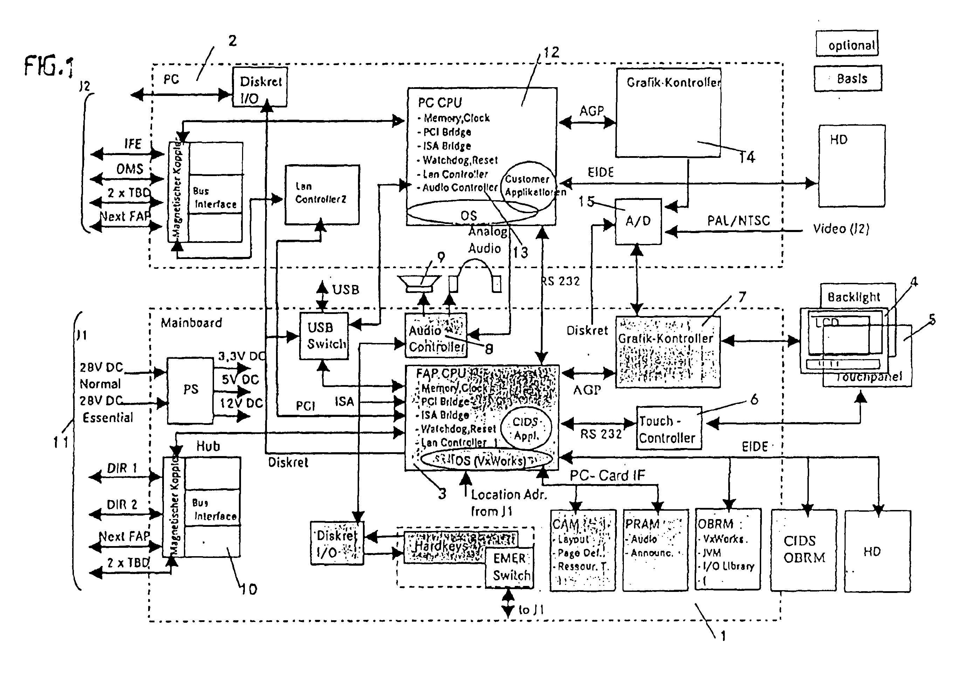

In Fig. 1 weist die Bedienungsvorrichtung 1 unter anderem einen Hauptrechner 3 mit einem vorgegebenen Betriebssystem und mit an das Kabinensystem angepaßter Anwendungssoftware, eine Bedieneroberfläche 4 mit einer oberflächensensitiven Eingabevorrichtung 5, einen Regler 6 zur elektrischen Verbindung der Bedieneroberfläche 4 mit dem Hauptrechner 3, einen Graphikregler 7, der zwischen Bedieneroberfläche 4 und Hauptrechner 3 angeordnet ist, einen Audioregler 8 mit nachgeordnetern Lautsprecher 9 und mindestens einen, an den Hauptrechner 3 angeschlossenen magnetischen Koppler 10 für zugeordnete Schnittstellen 11 auf.

Ein mit 2 bezeichneter Personalcomputer ist mit allen Teilen seiner Bauelemente in die Bedienungsvorrichtung 1 derart in einem Gehäuse mit einem Bildschirm und mit einer oberflächensensitiven Eingabevorrichtung integriert, dass diese Komponenten von dem Hauptrechner 3 und dem zusätzlichen Rechner 12 benutzt werden können. Der Hauptrechner 3 leitet die Video- & Audio-Daten der PC-Application direkt zum Bildschirm und Lautsprecher 9 weiter. Eingaben an der oberflächensensitiven Eingabevorrichtung 5 der Bedieneroberfläche 4 werden an den Personalcomputer 2 weitergeleitet und dort von den flugzeugautarken Applicationen verarbeitet. Hierbei kann vorteilhafterweise die zentrale Rechnereinheit 12 ein von dem Zentralrechner der Bedienungseinrichtung 1 unabhängiges Betriebssystem und/oder eine Software für fluglinienbezogene Anwendungsfunktionen aufweisen. Um zusätzliche autarke Funktionen mit Hilfe des Personalcomputers 2 durch eine Bedienungsperson ohne eine Beeinflussung der Funktionen der∼Bedienungsvorrichtung.1 durchführen zu können, sind der Audioregler 13 des Personalcomputers 2 an den Audioregler 8 der Bedienungseinrichtung 1 sowie der Graphikregler 14 des Personalcomputers 2 über einen Analog/Digital-Wandler 15 an den Graphikregler 7 der Bedienungsvorrichtung 1 angeschlossen. Vorteilhafterweise ist ein universeller, serieller Datenübertragungsbus (USB) für die Bauelemente der Bedienungsvorrichtung 1 und des Personalcomputers 2 vorgesehen, wobei eine Bedienung des Personalcomputers 2 grundsätzlich mittels der oberflächensensitiven Eingabevorrichtung 5 erfolgen kann.

Aus Fig. 2 ist die vollständige Bedienungsvorrichtung ersichtlich, wobei alle gezeigten Bauelemente in einem gemeinsamen Gehäuse angeordnet sind. Diese sind z. B. der Personalcomputer 2, der Hauptrechner 3, die Bedieneroberfläche 4, die oberflächensensitive Eingabevorrichtung 5 und die zentrale Rechnereinheit 12 des Personalcomputers 2.

## Patentansprüche

1. **Bedienungsvorrichtung für ein Kabinensystem in einem Flugzeug**, welches zur Überwachung und Steuerung der Funktionen von vorzugsweise Informations-, Audio-, Beleuchtungs-, Tür-, Wasser- und/oder Abwassersystemen dient, wobei die Bedienungsvorrichtung unter anderem einen Hauptrechner mit einem vorgegebenen Betriebssystem und mit an das Kabinensystem angepaßter Anwendungs-Software, eine Bedieneroberfläche mit einer oberflächensensitiven Eingabevorrichtung, einen Regler für die Bedieneroberfläche, einen Graphikregler, einen Audioregler und mindestens einen magnetischen Koppler für zugeordnete Schnittstellen aufweist, **dadurch gekennzeichnet, daß** ein zusätzlicher Personalcomputer (2) als zweiter Hauptrechner mit seiner zentralen Rechnereinheit (12) und weiteren elektronischen Baugruppen (13, 14, 15) in die Bedienungsvorrichtung (1) mit gemeinsamen Bildschirm und gemeinsamer oberflächensensitiven Eingabevorrichtung in einem Gehäuse derart integriert ist, daß eine Bedienung des zusätzlichen Personalcomputers (2) mittels der oberflächensensitiven Eingabevorrichtung (5) der Bedieneroberfläche (4) erfolgt, daß die zentrale Rechnereinheit (12) des Personalcomputers (2) an den Hauptrechner (3) der Bedienungseinrichtung (1) autark angeschlossen ist und daß zusätzliche autarke Funktionen mit Hilfe des integrierten Personalcomputers (2) durch eine Bedienungsperson ohne Beeinflussung der Funktionen der Bedienungsvorrichtung (1) durchführbar sind.

2. **Bedienungsvorrichtung** nach Anspruch 1, **dadurch gekennzeichnet, daß** die zentrale Rechnereinheit (12) ein von dem Hauptrechner (3) der Bedienungseinrichtung (1) unabhängiges Betriebssystem aufweist.

3. **Bedienungsvorrichtung** nach Anspruch 1 oder 2, **dadurch gekennzeichnet, daß** die zentrale Rechnereinheit (12) eine Software für fluglinienbezogene Anwendungsfunktionen aufweist.

4. **Bedienungsvorrichtung** nach Anspruch 1, 2 oder 3, **dadurch gekennzeichnet, daß** der Audioregler (13) des Personalcomputers (2) an den Audioregler (8) der Bedienungseinrichtung (1) angeschlossen ist.

5. **Bedienungsvorrichtung** nach Anspruch 1, 2 oder 3, **dadurch gekennzeichnet, daß** der Graphikregler (14) des Personalcomputers.(2) an den Graphikregler (7) der Bedienungsvorrichtung (1) angeschlossen ist.

6. **Bedienungsvorrichtung** nach einem der Ansprüche 1 bis 5, **gekennzeichnet durch** einen universellen, umschaltbaren seriellen Datenübertragungsbus (USB) für die Bauelemente der Bedienungsvorrichtung (1) und/oder des Personalcomputers (2).

## Claims

1. Operation device for a cabin system in an aircraft which is employed for monitoring and controlling of functions of preferably information systems, audio systems, illumination systems, door systems, water systems and/or wastewater systems, wherein the operation device comprises amongst others a main processor with a given operating system and with application software adapted to the cabin system, a user interface with a surface sensitive input device, a control unit for the user interface, a graphics control unit, an audio control unit and at least one magnetic coupling for associated interfaces, **characterized in that** an additional personal computer (2) is integrated in a housing together with the operation device (1) with a shared display and a shared surface sensitive input device, the additional personal computer (2) being adapted as second main processor with a central processing unit (12) and further electronic circuits (13, 14, 15), **in that** an operation of the additional personal computer (2) is provided by the surface sensitive input device (5) of the user interface (4), **in that** the central processing unit (12) of the personal computer (2) is coupled autarkic to the main processor (3) of the operation device (1) and that additional autarkic functions are executable assisted by the integrated personal computer (2) by an operator without influencing the functions of the Operating device (1).

2. Operating device according to claim 1, **characterized in that** the central processing unit (12) comprises an independent operating system, independent from the main processor (3) of the operation device (1).

3. Operation device according to claim 1 or 2, **characterized in that** the central processing unit (12) comprises a software for airline related applications.

4. Operation device according to claims 1, 2 or 3, **characterized in that** the audio control unit (13) of the personal computer (2) is connected to the audio control unit (8) of the operation device (1).

5. Operation device according to claim 1, 2 or 3, **characterized in that** the graphics control unit (14) of the personal computer (2) is connected to the graphics control unit (7) of the operation device (1).

6. Operation device according to one of claims 1 to 5, **characterized by** a universal, switchable serial data transmission bus (USB) for the circuit elements of the operation device (1) and/or the personal computer (2).

## Revendications

1. **Dispositif de commande pour un système de cabine dans un avion**, qui sert au contrôle et au réglage des fonctions, de préférence, de systèmes d'informations, audio, d'éclairage, de portes, d'eaux et/ou d'eaux usées, le dispositif de commande présentant, entre autres, un ordinateur principal avec un système d'exploitation prédéfini et un logiciel d'application adapté au système de cabine, une interface utilisateur avec un dispositif d'introduction sensitif, un contrôleur pour l'interface utilisateur, un contrôleur graphique, un contrôleur audio et au moins un coupleur magnétique pour des interfaces associées, **caractérisé en ce qu'**un ordinateur personnel (2) supplémentaire, en tant que second ordinateur principal, est intégré dans un carter, avec son unité informatique centrale (12) et d'autres composants électroniques (13, 14, 15), dans le dispositif de commande (1) avec un écran commun et un dispositif d'introduction sensitif commun de telle sorte qu'une manipulation de l'ordinateur personnel supplémentaire (2) s'effectue au moyen du dispositif d'introduction sensitif (5) de l'interface utilisateur (4), que l'unité informatique centrale (12) de l'ordinateur personnel (2) est raccordée en autarcie à l'ordinateur principal (3) du dispositif de commande (1), et que des fonctions autarciques supplémentaires sont réalisables à l'aide de l'ordinateur personnel intégré (2) par un opérateur, sans influer sur les fonctions du dispositif de commande (1).

2. **Dispositif de commande** suivant la revendication 1, **caractérisé en ce que** l'unité informatique centrale (12) présente un système d'exploitation indépendant de l'ordinateur principal (3) du dispositif de commande (1).

3. **Dispositif de commande** suivant l'une des revendications 1 et 2, **caractérisé en ce que** l'unité informatique centrale (12) présente un logiciel pour des fonctions d'applications rapportées aux lignes aériennes.

4. **Dispositif de commande** suivant l'une des revendications 1, 2 et 3, **caractérisé en ce que** le contrôleur audio (13) de l'ordinateur personnel (2) est raccordé au contrôleur audio (8) du dispositif de commande (1).

5. **Dispositif de commande** suivant l'une des revendications 1, 2 et 3, **caractérisé en ce que** le contrôleur graphique (14) de l'ordinateur personnel (2) est raccordé au contrôleur graphique (7) du dispositif de commande (1).

6. **Dispositif de commande** suivant l'une des revendications 1 à 5, **caractérisé par** un bus de transmission de données sériel (USB) commutable, universel, pour les composants du dispositif de commande (1) et/ou de l'ordinateur personnel (2).
